# EUROPEAN PATENT APPLICATION

(11) **EP 2 583 823 A1**
(43) Date of publication of application: **24.04.2013**
(21) Application number: 11400047.4
(22) Date of filing: 20.10.2011
(51) Int. Cl.: B32B 25/08

(54) **Sound attenuating airframe from an air vehicle**

(71) Applicant: Eurocopter Deutschland GmbH, 86609 Donauwörth (DE)
(72) Inventor: Kreitmair-Steck, Wolfgang, 85521 Ottobrunn (DE); Hebensperger, Michael, 81677 München (DE)
(74) Representative: Schmid, Rudolf

(57) **Abstract**

The invention relates to a sound attenuating airframe of an air vehicle, particularly a sound attenuating air frame of an airplane or a helicopter, containing an airframe component, which is a sound attenuating composite component (1, 10, 20, 30) with an upper layer (2) made of hard plastic or tissue material and bonded at least partially by a thermosetting resin to at least one elastomer layer (3) provided with at least one cross-linking agent and at least one further component (4, 7, 8) bonded at least partially by a thermosetting resin to said at least one elastomer layer (3).

## Description

The invention relates to sound attenuating airframe of composite components for an air vehicle according to the features of claim 1.

Air vehicles, namely helicopters create considerable noise disturbance partly due to vibrations induced from components into the airframe of any such air vehicles. Vibrations caused by main and tail rotors of helicopters and by propellers or jet engines of airplanes are usually injected into the airframe without damping and cause a significant disturbance level of vibrations and noise for the passengers. Any reduction of vibrations from components of the airframe is suitable to reduce noise disturbance to the surrounding.

It is known to use passive action to attenuate or insulate vibrations and noise disturbance by means of e. g. elastomer-supports, Helmholtz-resonators or vibration absorbing panels. Insulation of vibrations from the airframe is fairly difficult to realize and can increase the overall weight and cost significantly. Helmholtz resonators operate most efficient for low frequencies but require large resonance volumes as well as holes at the side of the sound exposure which can close or fill up with dust and/or water during operation of the aircraft. Supplemental action to attenuate vibrations may use active actuators such as electric actuators, piezo-electric actuators creating counter sound. To provide for active sound and vibration attenuation however increases the weight and cost of the airframe significantly.

The document DE 19706689 A1 discloses a cellular structure with an outer skin of a fibre composition material or metal, a cellular layer e.g., of a honeycomb material or foam, and an inner lining skin. The outer skin and lining are connected by vibration damping layers which can be made from supple elastomer layers and metal strips, or from a resin material.

The document US 6179086 B1 discloses a sandwich composite panel as noise protection, especially for a helicopter fuselage cell or cabin. The panel includes an inner honey-comb core made up of hollow cell bodies extending transversely and sandwiched between first and second cover skins of fiber composite material. In order to achieve a low weight, a simple manufacturing and good noise absorption, at least one of the cover skins adapted to face the main source of noise is made up of an open mesh fiber composite net and a flexible cover film applied on the outer surface of this fiber composite net. The net has a smaller mesh size than the inner cross-sectional size of the hollow cell bodies.

The document WO 2006122749 A1 discloses a composite structure which comprises at least two layers. A first layer consists at least partially of a thermosetting resin and a second layer consists at least partially of an elastomer that is provided with a cross-linking agent. The at least one first layer consisting at least partially of a thermosetting resin and the at least one second layer consisting at least partially of an elastomer that is provided with a cross-linking agent are joined by a common heat treatment or another cross-linking treatment in one step. Said composite structure is used as a light weight vibration damper for rotor blades of helicopters, wings of airplanes, as interior panelling of a vehicle and as projectile retardant component.

It is an objective of the invention to provide for an airframe, e.g. skin, spar elements, floor elements of an air vehicle with improved attenuation of vibration and/or sound without significantly increasing the weight and production cost of the airframe.

The solution to this objective is provided with a sound attenuating airframe of an air vehicle with the features of the claim 1. Advantageous embodiments of the invention are provided with the subclaims.

According to the invention a sound attenuating airframe of an air vehicle is provided, particularly an air frame of an airplane or an helicopter, comprising lateral and bottom skin, exterior or interior panelling, ribs, spar elements, avionics bays and cabinets, gearbox- and/or engine-, and/or rotor-mount sheathed by an outer cover, characterized in that said element and/or its outer cover is a sound attenuating composite component with an upper layer made of hard plastic or tissue material and bonded at least partially by a thermosetting resin, to at least one elastomer layer provided with at least one cross-linking agent and at least one further component covered by and bonded to said second layer. The inventive sound attenuating airframe with said elements and/or an outer cover made of a sound attenuating composite component allows a reduction of vibration intensities directly on the spot where the sound waves or the vibrations, e. g. from a ventilator, a rotor, a propeller or a turbine, hit from outside or inject into the air frame of the air vehicle thus reducing the evolution and/or extension of structure born noise or sound conducted through solids of the structure towards e. g. a passengers cabin of the air vehicle. The inventive airframe is load bearing and reduces the overall vibration and/or noise levels of the air vehicle without actually contributing to the volume and/or the weight of the inventive airframe. The inventive airframe reduces in a simple way and at low cost any vibration and/or noise emissions from the air vehicle to the surrounding and consequently reduces the environmental burden for populations concerned. The integration of two elastomer layers directly below an upper and on top of a bottom layer as foreseen with the inventive airframe improves by a factor 4 the attenuation characteristics of the composite component.

According to a preferred embodiment of the invention the further component is a plurality of layers made of plastic or tissue material and at least partially of a thermosetting resin covering a further elastomer layer provided with at least one cross-linking agent said further elastomer layer covering a lower layer made of tissue material and bonded at least partially by a thermosetting resin for further improvement of the load bearing characteristics by the plurality of layers made of tissue material, preferably alternating with further elastomer layers and bonded at least partially by a thermosetting resin, and further improvement of the attenuation characteristics through the further elastomer layer provided with at least one cross-linking agent of the sound attenuating composite component of the inventive airframe.

According to a further preferred embodiment of the invention the further component is a sheet metal for further improvement of the load bearing characteristics by the at least one further component.

According to a further preferred embodiment of the invention the sheet metal covers the further elastomer layer provided with at least one cross-linking agent said further layer covering a lower layer made of plastic or tissue material and bonded at least partially by a thermosetting resin for further improvement of the load bearing characteristics by the at least one further component and further improvement of the attenuation characteristics through the further elastomer layer provided with at least one cross-linking agent.

According to a further preferred embodiment of the invention the further component is a plurality of layers made of plastic or tissue material, preferably alternating with further elastomer layers, and bonded at least partially by a thermosetting resin covering a planar honeycomb structure, said planar honeycomb structure covering a plurality of lower layers made of plastic or tissue material, preferably alternating with further elastomer layers, and bonded at least partially by a thermosetting resin, said lower layers covering a further lower elastomer layer provided with at least one cross-linking agent, and said further lower elastomer layer covering a bottom layer made of plastic or tissue material and bonded at least partially by a thermosetting resin for further improvement of the load bearing characteristics and further improvement of the attenuation characteristics of the inventive airframe. The planar honeycomb structure increases the stiffness and minimizes the masses of the inventive airframe.

According to a further preferred embodiment of the invention the sound attenuating composite component is applied to an airframe as a top and/or lateral and/or bottom skin, and/or as exterior or interior panelling, and/or as ribs, and/or as spar elements, and/or as avionics bays and cabinets, and/or to gearbox-, and/or engine- and/or rotor mount of an air vehicle and/or the housing of a tail rotor of a helicopter.

Preferred embodiments of the invention are presented with reference to the enclosed description and attached drawings.
Fig. 1 shows a schematic view of a sound attenuating composite component for an airframe according to the invention,
Fig. 2 shows a schematic view of a preferred embodiment of a sound attenuating composite component for an airframe according to the invention,
Fig. 3 shows a schematic view of a further preferred embodiment of a sound attenuating composite component for an airframe according to the invention, and
Fig. 4 shows a schematic view of a still further preferred embodiment of a sound attenuating composite component for an airframe according to the invention.

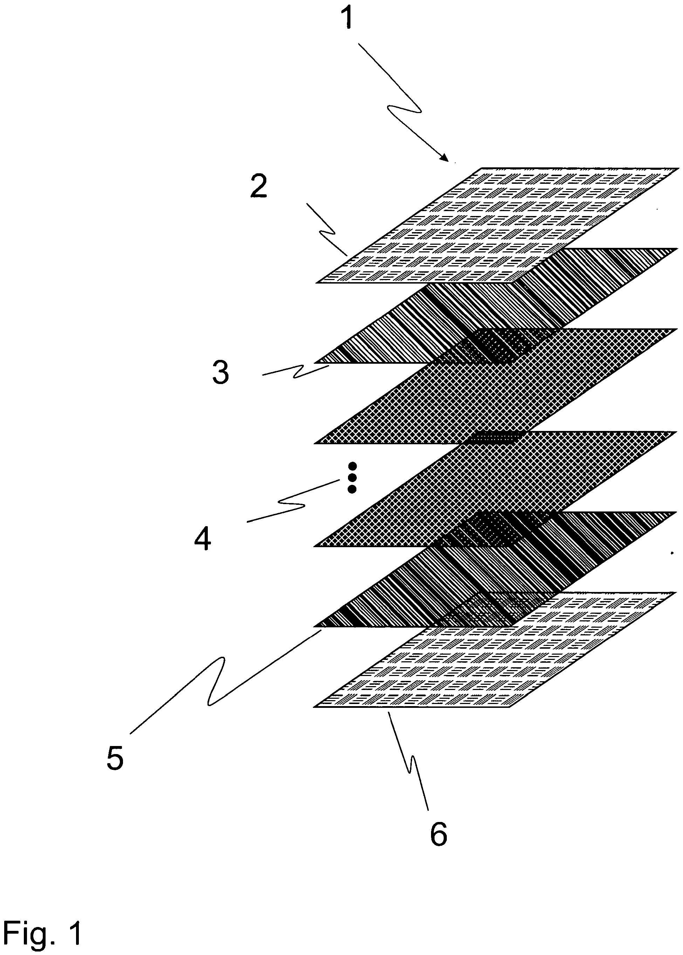

According to Fig. 1 a sound attenuating composite component 1 for an airframe (not shown) is made of an upper layer 2 made of hard plastic or tissue material and at least partially of a thermosetting resin, covering at least one elastomer layer 3 provided with at least one cross-linking agent. The thermosetting resin is a polyester resin, a phenol-formaldehyde resin, an epoxy resin or acrylate resin. Stability of the sound attenuating composite component 1 is achieved by means of a chemical reaction of the thermosetting resin with the second elastomer layer 3. The tissue material comprises glass fiber, nylon fiber, polyester fiber, carbon fiber, viscose fiber, aramid fiber or metal fiber. The hard plastic material comprises polyethylene (PE), high molecular weight polyethylene (HMW-PE), ultra high molecular weight polyethylene (UHMW-PE), polytetrafluorethylen (PTFE) or polyurethane (PU).

The elastomer layer 3 covers a plurality of layers 4 made of the tissue material, preferably further elastomer layers, and bonded at least partially by the thermosetting resin. Said plurality of layers 4 covers a further elastomer layer 5 provided with at least one cross-linking agent, said further elastomer layer 5 covering a lower layer 6 made of the hard plastic or tissue material and bonded at least partially by the thermosetting resin.

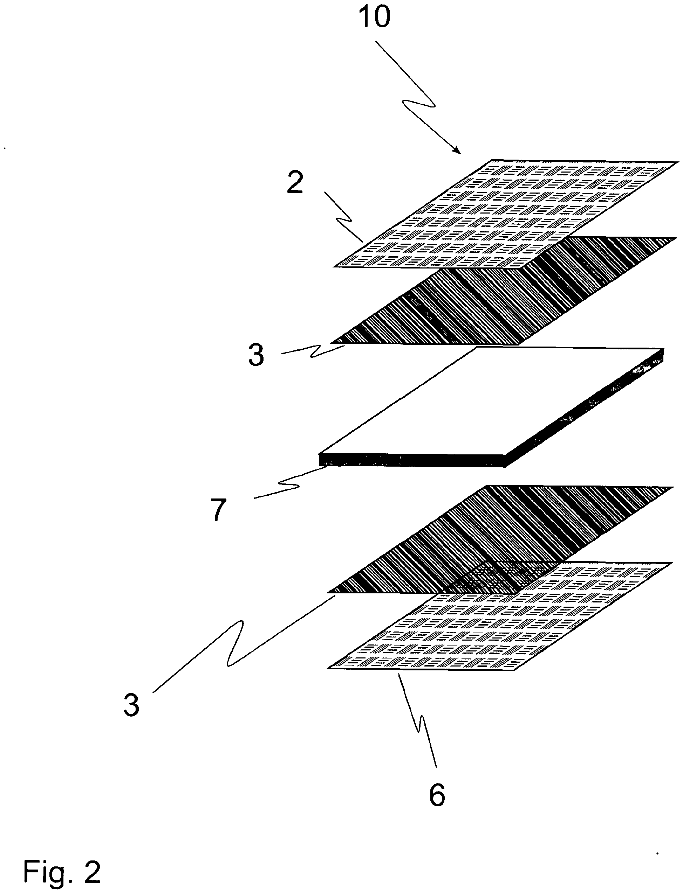

According to Fig. 2 corresponding features are referred to with the references of Fig. 1. A sound attenuating composite component 10 for an airframe is made of the upper layer 2 made of the hard plastic or tissue material and at least partially of the thermosetting resin, covering the at least one elastomer layer 3 provided with the at least one cross-linking agent.

The elastomer layer 3 covers a sheet metal 7 made of a light alloy and is bonded to the sheet metal 7 at least partially by the thermosetting resin. Said sheet metal 7 covers and is bonded to the further elastomer layer 5 at least partially by the thermosetting resin. Layer 5 is provided with the at least one cross-linking agent and covers the lower layer 6 made of the hard plastic or tissue material and bonded at least partially by the thermosetting resin.

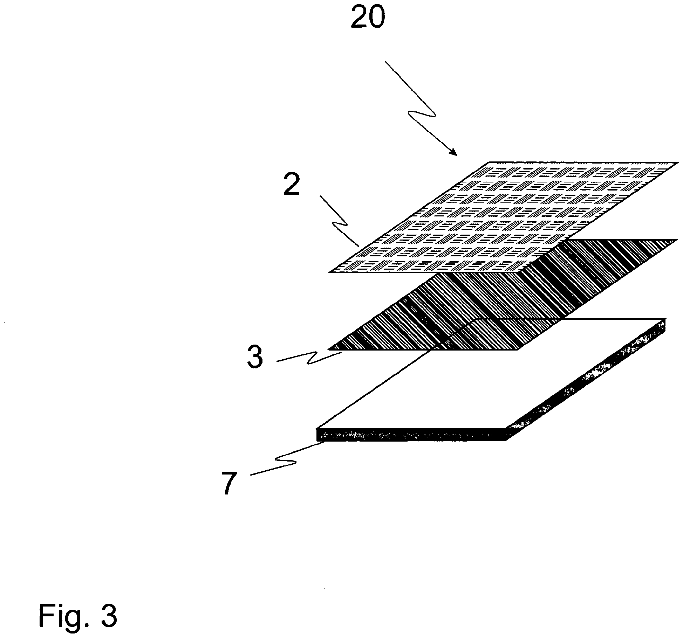

According to Fig. 3 corresponding features are referred to with the references of Fig. 1 and 2. A sound attenuating composite component 20 for an airframe is made of the upper layer 2 made of the hard plastic or tissue material and bonded at least partially by the thermosetting resin to the at least one elastomer layer 3 provided with the at least one cross-linking agent.

The elastomer layer 3 covers the sheet metal 7 made of the light alloy or light alloy foil and is bonded to the sheet metal 7 at least partially by the thermosetting resin.

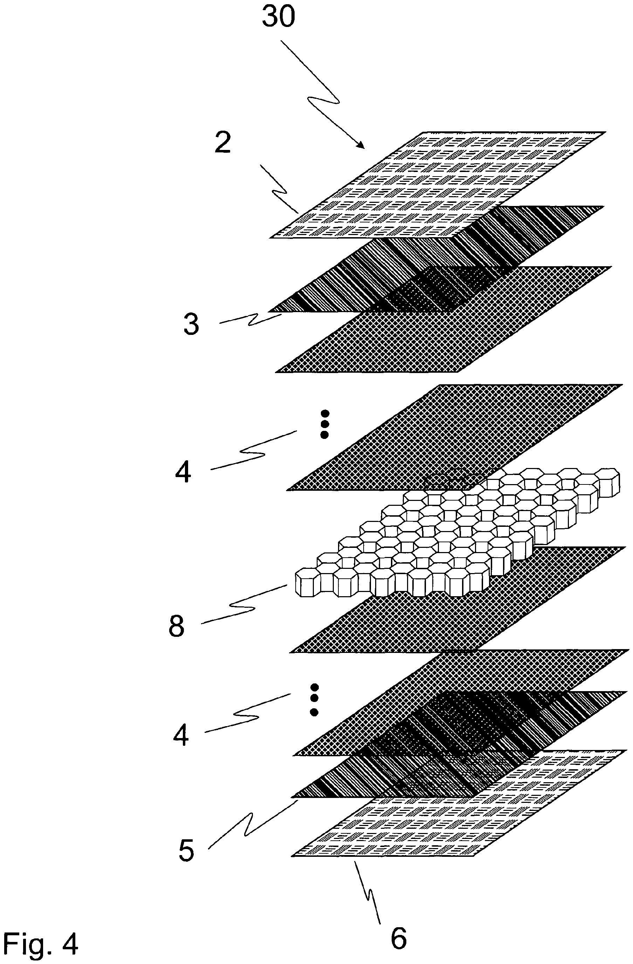

According to Fig. 4 corresponding features are referred to with the references of Fig. 1 to 3. A sound attenuating composite component 30 for an airframe is made of the upper layer 2 made of the hard plastic or tissue material and bonded at least partially by the thermosetting resin, to the at least one elastomer layer 3 which is provided with the at least one cross-linking agent.

The elastomer layer 3 is bonded to at least partially by the thermosetting resin and covers the plurality of layers 4 made of the tissue material, preferably further elastomer layers, and is bonded at least partially by the thermosetting resin. Said plurality of layers 4 cover a honeycomb structure 8 made of a light alloy or fibre reinforced plastics. Said honeycomb structure 8 covers another plurality of layers 4 made of the tissue material, preferably further elastomer layers, and bonded least partially by the thermosetting resin, which in turn cover the further elastomer layer 5 provided with the at least one cross-linking agent. Said further elastomer layer 5 covers the lower layer 6 made of the hard plastic or tissue material and bonded at least partially by the thermosetting resin.

The sound attenuating composite component 1, 10, 20, 30 is applied to airframes as a top and/or lateral and/or bottom skin, and/or as exterior or interior panelling, and/or as ribs, and/or as spar elements, and/or as avionics bays and cabinets, and/or to gearbox-, and/or engine- and/or rotor mount of an air vehicle and/or the housing of a tail rotor of a helicopter and/or to the interfaces between mechanically stimulated components and passenger cabins for noise reduction.

### Reference List

- 1, 10, 20, 30: sound attenuating composite component
- 2: upper layer
- 3: elastomer layer
- 4, 7, 8: further component
- 5: further elastomer layer
- 6: lower layer
- 7: sheet metal
- 8: honeycomb structure

## Claims

1. A sound attenuating airframe of an air vehicle, particularly a sound attenuating air frame of an airplane or a helicopter, containing an airframe component,
**characterized in that** said
airframe component is a sound attenuating composite component (1, 10, 20, 30) with
an upper layer (2) made of hard plastic or tissue material and bonded at least partially by a thermosetting resin to at least one elastomer layer (3) provided with at least one cross-linking agent and
at least one further component (4, 7, 8) bonded at least partially by a thermosetting resin to said at least one elastomer layer (3).

2. The airframe according to claim 1,
**characterized in that** the further component (4) is a plurality of layers made of tissue material and preferably further elastomer layers.

3. The airframe according to claim 1,
**characterized in that** the further component (4) is a plurality of layers made of tissue material and preferably further elastomer layers, and bonded at least partially by a thermosetting resin to a further elastomer layer (5) provided with at least one cross-linking agent said further elastomer layer (5) covering a lower layer (6) made of hard plastic or tissue material to which it is bonded at least partially by a thermosetting resin.

4. The airframe according to claim 1,
**characterized in that** the further component is a sheet metal (7).

5. The airframe according to claim 4,
**characterized in that** the sheet metal (7) covers a further elastomer layer (5) provided with at least one cross-linking agent said further elastomer layer (5) covering the lower layer (6) made of hard plastic or tissue material and bonded together at least partially by a thermosetting resin.

6. The airframe according to claim 1,
**characterized in that** the further component is a plurality of layers (4) made of tissue material and preferably further elastomer layers and bonded at least partially by a thermosetting resin to a planar honeycomb structure (8), said planar honeycomb structure (8) covering the plurality of lower layers (4) made of tissue material and preferably further elastomer layers and bonded together at least partially by a thermosetting resin, said lower layers (4) covering the further elastomer layer (5) provided with at least one cross-linking agent, and said further lower elastomer layer (5) covering the bottom layer (6) made of hard plastic or tissue material and bonded at least partially by a thermosetting resin.

7. The airframe according to claim 1, 2, 3, 4, 5, or 6,
**characterized in that** the said sound attenuating airframe component is a top, lateral or bottom skin.

8. The airframe according to claim 1, 2, 3, 4, 5, or 6,
**characterized in that** the said sound attenuating airframe component is an exterior or interior panelling.

9. The airframe according to claim 1, 2, 3, 4, 5, or 6, **characterized in that** the said sound attenuating airframe component is a spar element.

10. The airframe according to claim 1, 2, 3, 4, 5, or 6,
**characterized in that** the said sound attenuating airframe component is an avionics bay or cabinet.

11. The airframe according to claim 1, 2, 3, 4, 5, or 6,
**characterized in that** the said sound attenuating airframe component is a gearbox-, engine- or rotor-mount.

12. The airframe according to claim 1 , 2, 3, 4, 5, or 6,
**characterized in that** the said sound attenuating airframe component is a cover of a gearbox-, engine- or rotor-mount.

13. The airframe according to claim 1, 2, 3, 4, 5, or 6,
**characterized in that** the said sound attenuating airframe component is an interfaces between mechanically stimulated components and passenger cabins.
